# EUROPEAN PATENT SPECIFICATION

(11) **EP 3 498 077 B1**
(45) Date of publication and mention of the grant of the patent: **21.07.2021**
(21) Application number: 18205718.2
(22) Date of filing: 12.11.2018
(51) Int. Cl.: A01D 75/00, A01D 34/00

(54) **ACCOMMODATION DEVICE**
UNTERBRINGUNGSVORRICHTUNG
DISPOSITIF DE RANGEMENT

(30) Priority: 12.12.2017 JP 2017237638
(43) Date of publication of application: 19.06.2019
(73) Proprietor: Kubota Corporation, Osaka-shi, Osaka 556-8601 (JP)
(72) Inventor: UMEMOTO, Hideya, Sakai-shi, Osaka, 5900823 (JP); SHINKAI, Kentaro, Sakai-shi, Osaka, 5900823 (JP); KOMORIDA, Takeshi, Sakai-shi, Osaka, 5900823 (JP); UEMOTO, Kensuke, Sakai-shi, Osaka, 5900823 (JP); YAMADA, Shinichi, Sakai-shi, Osaka, 5900823 (JP); KOMORI, Kanako, Sakai-shi, Osaka, 5900823 (JP)
(74) Representative: Cabinet Beau de Loménie

(56) References cited:
- WO-A1-2017/099644
- DE-A1-102013 013 019
- US-A1- 2008 298 943

## Description

### TECHNICAL FIELD

This invention relates to an accommodation device for accommodating a plurality of work vehicles which carry out a work while traveling autonomously.

### BACKGROUND DISCUSSION

Conventionally, there has been used a technique for causing a vehicle to travel autonomously. As an example of such vehicle which travels autonomously, there is known a work vehicle which effects unmanned traveling while carrying out a predetermined work (e.g. grass cutting/mowing work) in a vast field.

An unmanned traveling work vehicle disclosed in Patent Document 1 includes an electric motor mounted on a vehicle body and receiving power from a battery and an engine mounted on the vehicle body. In operation, as the vehicle travels in a work area with driving its wheels by the engine, an implement mounted on the vehicle body is driven by the electric motor for carrying out a work.

Patent Document 2 relates to a method and means for mowing lawns.

Patent Document 1: Japanese Unexamined Patent Application Publication No. 2013-164741
Patent Document 2: International Application No. WO2017/099644A1

### SUMMARY

### [Problem to be Solved by Invention]

Here, the work carried out by the unmanned work vehicle disclosed in Patent Document 1 can be carried out by using not only an unmanned traveling work vehicle owned by an individual, but by an unmanned traveling work vehicle owned by a contractor firm. And, such contractor firm can sometimes carry out a plurality of contracted works by using a plurality of unmanned traveling work vehicles. The technique disclosed in Patent Document 1 does not contemplate or expect transportation of a work vehicle(s) to a work site where the contracted work is to be carried out. So smooth transportation of the work vehicle(s) may not be possible.

Then, there is a need for an accommodation device capable of transporting a work vehicle(s) smoothly.

### [Solution]

According to the present invention, an accommodation device configured to accommodate a plurality of work vehicles that carry out a work while traveling autonomously, comprises:
a plurality of accommodation cases configured to be mounted on a load carrying bed of a transporter vehicle and capable of accommodating the plurality of work vehicles individually;
a supporting section for supporting the plurality of accommodation cases respectively and arranged to allow movement thereof along a preset path;
an actuator for driving the supporting section for causing the accommodation cases to move along the path; and
an electric generator for supplying electric power to the actuator ,
the accommodation cases (21), the supporting section (22), the actuator (23), and the electric generator (24) being configured to be mounted altogether on the load carrying bed of the transporter vehicle (300).

With the above-described features, it becomes possible to transport a plurality of work vehicles smoothly. Therefore, even when a contractor firm owning a plurality of work vehicles is to travel to a plurality of work sites different from each other, the assignment can be accomplished by a smaller number of attendants.

Further, preferably, the accommodation device further comprises:
a detection section for detecting a stored power amount of the battery mounted on the work vehicle as the work vehicle is accommodated in the accommodation case; and
a power storage section for charging electric power to the battery to be stored therein by using electric power from the electric generator in case the stored power amount of the battery falls short of a preset power storage amount.

With the above-described arrangement, it becomes possible to charge a battery of the work vehicle during transportation thereof by a transporter vehicle. Therefore, it becomes possible to carry out the work by the work vehicle speedily at the destination of the transporter vehicle.

Further, preferably, the accommodation device further comprises:
a temperature sensor mounted on the work vehicle for detecting an ambient temperature;
a gas cylinder mounted on the work vehicle and charged with fire extinguishing gas; and
a valve control section configured to open a valve of the gas cylinder when the ambient temperature becomes equal to or higher than a preset temperature.

With the above-described arrangement, even if a fire should occur in the vicinity of the work vehicle, such fire can be extinguished automatically. Thus, as catching fire by the work vehicle can be prevented, even when a user is not present nearby, damage or deterioration of the work vehicle can be prevented. Further, if the fire extinguishing gas was used, only its cylinder can be replaced. So, increase of component cost can be suppressed advantageously.

Moreover, preferably:
the work to be carried out by the work vehicles is a grass cutting work for cutting grass growing in the work site; and
the work vehicle includes an air blowing section for blowing air onto a dropped object in the work site.

With the above-described arrangement, it becomes possible to collect dropped objects in a work site automatically at time of the work by the work vehicle. Therefore, collection of dropped objects in a work site is possible without giving trouble to the user.

Further, preferably:
the work to be carried out by the work vehicles is a grass cutting work for cutting grass growing in the work site; and
the work vehicle includes an arm portion that extends from a vehicle body along a work surface of the work site in a direction intersecting an advancing direction of the work vehicle.

With the above arrangement too, collection of dropped objects in a work site is possible without giving trouble to the user.

### BRIEF DESCRIPTIION OF THE DRAWINGS

[Fig. 1] is a side view of a work vehicle,
[Fig. 2] is a plan view of the work vehicle,
[Fig. 3] is a view showing a mode of collecting grass leaves by air blowing,
[Fig. 4] is a view showing a mode of collecting grass leaves by arm portions,
[Fig. 5] is a view schematically showing a configuration of an accommodation device, and
[Fig. 6] is a view illustrating charging of a battery.

### EMBODIMENT

An accommodation device relating to the present invention is configured to be able to transport work vehicles smoothly. This accommodation device is a device for accommodating a plurality of work vehicles that carry out a work while traveling autonomously. In the following, the term "instant embodiment" refers to a working vehicle for being used with the accommodation device according to the invention, wherein the working vehicle in isolation does not form part of the claimed invention. In the following discussion, there will be explained an exemplary case of carrying out a grass (lawn) cutting (mowing) work for cutting grass (lawn) grown or planted in a work site. Here, the language "autonomous traveling" relating to the instant embodiment refers to traveling along a traveling route set based on an output of a device mounted on the work vehicle (e.g. an output of a sensor, a captured image captured by a camera, etc.), while avoiding objects (e.g. obstacles, etc.). Such work vehicle corresponds to a so-called autonomous robot.

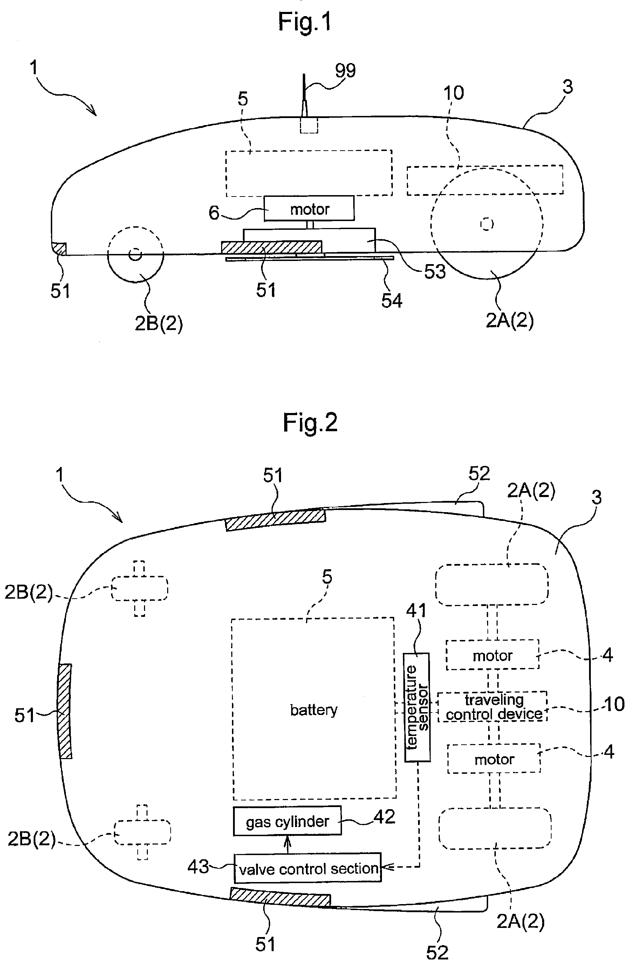

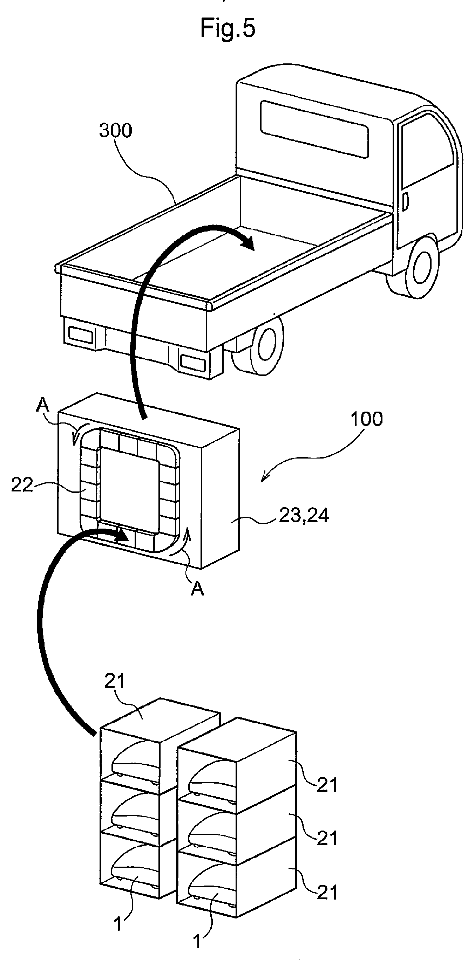

Fig. 1 shows a side view of a work vehicle 1 to be accommodated in an accommodation device 100 (see Fig. 5) according to the invention. Fig. 2 shows a plan view of the work vehicle 1. As shown in Fig. 1 and Fig. 2, the work vehicle 1 includes wheels 2 and a vehicle body 3. The wheels 2 consist of first wheels 2A on one end side in a vehicle longitudinal direction of the vehicle body and second wheels 2B on the other end side in the vehicle longitudinal direction. The first wheels 2A and the second wheels 2B are provided respectively one left and right pair along a width direction of the vehicle body. In the instant embodiment, the first wheels 2A are configured as driving/steerable wheels provided on the rear side in the advancing direction of the work vehicle 1 and driven by a traveling control device 10 to be described later. The second wheels 2B are configured as so-called caster wheels provided on the front side in the advancing direction of the work vehicle 1. Accordingly, when the left and right wheels of the first wheels 2A are rotated at an equal speed and in a same direction, straight traveling is effected. When the left and right wheels of the first wheels 2A are rotated at different speeds and in a same direction, steering is effected to the side of the slower speed one of the left and right wheels of the first wheels 2A. Further, when the left and right wheels of the first wheels 2A are rotated at an equal speed and in different directions, the work vehicle 1 can spin at its present position. Incidentally, although it was explained in the above that the first wheels 2A and the second wheels 2B are provided respectively one left and right pair along the width direction of the vehicle body, this is just one example. Alternatively, it is also possible to configure such that the respective numbers of the first wheels 2A and the second wheels 2B differ from each other depending on e.g. the size of the vehicle body or they are comprised of either one or three or more wheels.

The vehicle body 3 mounts a pair of motors 4 as power source for the first wheels 2A, a battery 5 for storing an amount of electric power to be supplied to the motors 4 and other electric devices included in the work vehicle 1, the traveling control device 10 for controlling traveling of the work vehicle 1, and a motor 6 driven by power supplied from the battery 5 for driving a grass cutter device 53 (an example of "implement unit") having a cutter blade 54 used in cutting grass.

Further, the vehicle body 3 mounts a GPS module 99 constituted as a GNSS module. This GPS module 99 has a GPS antenna for receiving GPS signals or GNSS signals ("GPS signals" in the instant embodiment). Incidentally, for complementing the GPS navigation, the GPS module 99 may include an inertial navigation module incorporating a gyro acceleration sensor a magnetic field sensor. Needless to say, such inertial navigation module may be provided at a site different from the GPS module 99. The GPS signals acquired by the GPS module 99 will be utilized in autonomous traveling of the work vehicle 1 described above.

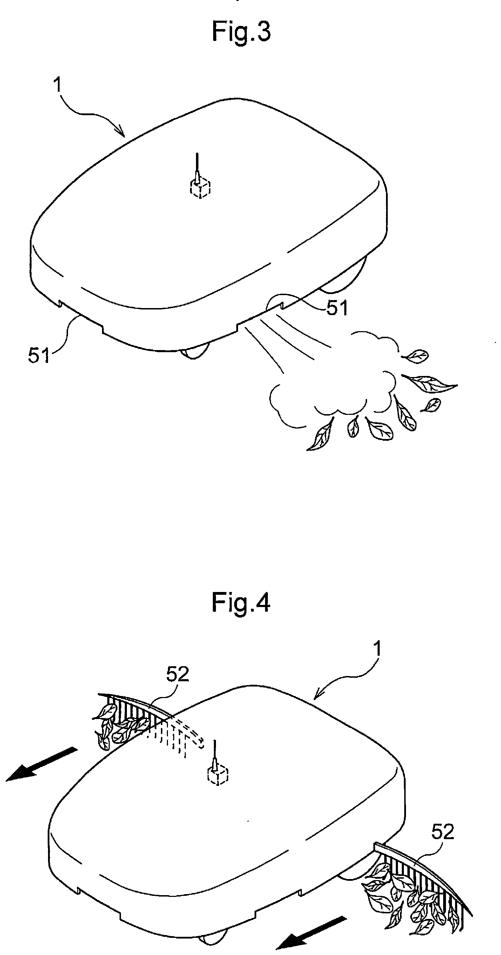

The work vehicle carries out a grass cutting work on grass grown or planted in a work site. In such work site, there can be leaves which have fallen from trees in its surrounding. Further, there may be fallen wastepaper, bodies of insects, etc. there. Then, the work vehicle 1 is provided with an air blowing section 51 for blowing air to such fallen objects present in the work site. The "fallen objects" in the work site correspond to leaves, wastepaper, insect bodies, etc. described above. In the instant embodiment, the following explanation will be made with citing leaves as fallen objects in the work site. The work vehicle 1 is configured to blow air from the air blowing section 51 in the direction toward a designated place. With this, as shown in Fig. 3, leaves receiving the air from the air blowing section 51 of the work vehicle 1 can be collated at the designated place. Incidentally, the air from the air blowing section 51 may be discharged constantly while the work vehicle 1 is carrying out a grass cutting work or may be discharged if presence of fallen leaves in the work site is detected by using a captured image captured by an unillustrated camera or a sonar.

Further, in the instant embodiment, the work vehicle 1 is provided with arm portions 52 which extend from the vehicle body in directions intersecting the advancing direction of the work vehicle 1 and along the work surface of the work site. In the instant embodiment, as shown in Fig. 2, these arm portions 52 are stored at lateral face portions of the work vehicle 1 and can be spread out when needed in the directions intersecting the advancing direction of the work vehicle 1 to be capable of collecting the fallen objects in the work site (e.g. leaves, wastepaper, insect bodies, etc.). With this, as illustrated in Fig. 4, the fallen objects can be collected by the arm portions 52. Further, the arm portions 52 can be arranged to be spread out constantly while the work vehicle 1 is carrying out a grass cutting work or may be arranged to be spread out when presence of fallen leaves in the work site is detected by using a captured image captured by the unillustrated camera or the sonar. Incidentally, for the fallen objects in the work site, both of the air blowing section 51 and the arm portions 52 may be employed or either one of them may be employed.

In the above, although the work vehicle 1 carries out a grass cutting work, the cut grass clippings will be discharged onto the work site for the so-called mulching purpose. Then, if such discharged grass clippings catch fire which then extends to the work vehicle 1, the work vehicle 1 may not be used continuously. Then, this work vehicle 1 is configured to prevent such catching fire. In the instant embodiment, as shown in Fig. 2, the work vehicle 1 mounts a temperature sensor 41 for detecting an ambient temperature. Here, "ambient temperature" refers to the temperature at the position where the temperature sensor 41 is disposed. In Fig. 2, the temperature sensor 41 is accommodated within the vehicle body 3, but may be provided on the outer face of the vehicle body 3 instead. The temperature sensor 41 detects the temperature (ambient temperature) its disposed location and transmits detection result to a valve control section 43 to be described later.

The work vehicle 1 further mounts a gas cylinder 42 charged with an amount of fire extinguishing gas. This fire extinguishing gas is gas that extinguishes fire or suppress catching fire by its suffocation effect of covering up combustible objects.

Specifically, carbon dioxide gas can be cited as an example thereof. The gas cylinder 42 is charged/filled with such carbon dioxide gas. Needles to say, the gas cylinder 42 may be charged/filled with nitrogen gas, so that fire may be extinguished or catching fire may be suppressed by increasing the nitrogen gas concentration to reduce the oxygen concentration inside the vehicle body 3.

The valve control section 43 is configured to open a valve of the gas cylinder 42 when the ambient temperature becomes equal to or higher than a preset temperature. The ambient temperature will be transmitted as detection result from the temperature sensor 41. Here, the "preset temperature" may be set as a temperature at which fire can be detected or a temperature at which catching of fire by an object will hardly occur. Then, the valve control section 43 automatically opens the valve of the gas cylinder 42 if the detection result of the temperature sensor 41 is equal to or higher than the preset temperature. With this, the fire extinguishing gas charged in the gas cylinder 42 will be jetted, whereby fire if occurred will be extinguished or nearly catching fire condition may be suppressed for preventing catching fire.

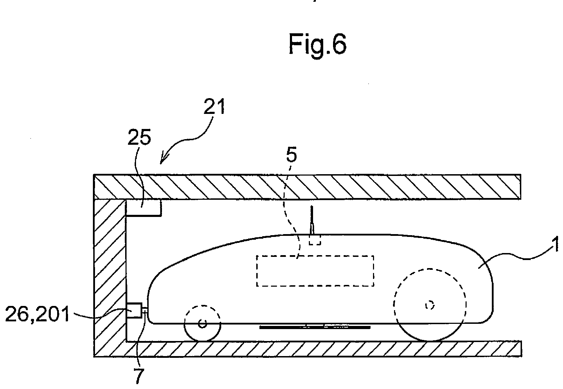

Fig. 5 is a block diagram schematically showing a configuration of the accommodation device 100 of the instant embodiment. Further, Fig. 6 is a view illustrating charging of the battery 5 of the work vehicle 1. As shown in Fig. 5 and Fig. 6, the accommodation device 100 includes, as functional sections thereof, accommodation cases 21, a supporting section 22, an actuator 23, an electric generator 24, a detection section 25 and a power storage section 26. These respective functional sections can be constituted of hardware and/or software including a CPU as a core component thereof in order to carry out various operations relating to accommodation of the work vehicle 1.

Fig. 5 shows that the accommodation cases 21 are spaced from the supporting section 22, the actuator 23 and the electric generator 24. In actuality, however, the accommodation cases 21 are mounted as being joined to the supporting section 22 and the accommodation cases 21, the supporting section 22, the actuator 23 and the electric generator 24 will mounted altogether on a load carrying bed of a transporter vehicle (e.g. a truck) 300.

The accommodation cases 21 are provided in plurality so as to be able to accommodate a plurality of work vehicles 1 individually therein. In Fig. 5, there is shown an example in which the work vehicles 1 are accommodated in six accommodation cases 21 respectively. Each accommodation case 21 is moved along the supporting section 22 as will be described later. In this, in order to prevent accidental exiting or dropping of the work vehicle 1 from the accommodation case 21, a shutter may be attached to the opening portion of the accommodation case 21.

The supporting section 22 is arranged to support the plurality of accommodation cases 21 and to allow movements thereof along a preset path. In the instant embodiment, the supporting section 22 is formed like a "rail" of a preset path (track) (vertically disposed in the example shown in Fig. 5) and supports the accommodation cases 21 from the lateral sides thereof. Though not shown, in a side face of the accommodation case 21, a joint portion connectable to the supporting section 22 may be provided, so that this joint portion and the supporting section 22 may be joined to each other. The supporting section 22 is arranged to be rotatable along an arrow A shown in Fig. 5. With this arrangement, it becomes possible to provide an instruction for causing each accommodation case 21 to move along the preset path.

The actuator 23 drives the supporting section 22 for causing the accommodation cases 21 to move along the path. As described above, the supporting section 22 is provided along the preset path and supports the accommodation cases 21. And, the actuator 23 is arranged to render the supporting section 22 to be rotatable as indicated by the arrow A. With this, the accommodation cases 21 as accommodating the work vehicles 1 therein will be moved along the path. This movement can be done by an operation of a switch by the user.

The electric generator 24 supplies electric power to the actuator 23. The actuator 23, as configured as an electrically driven type, is driven by the power supplied from the electric generator 24. With the above-described configuration of the accommodation device 100, it is possible to transport the plurality of work vehicles 1 smoothly by the transporter vehicle 300, thus allowing use of a required number of work vehicles 1 according to the work site and/or contents of the work.

Fig.6 shows a mode of charging of the battery 5 of the work vehicle 1. As shown in Fig. 6, each accommodation case 21 includes the detection section 25 and the power storage section 26. The detection section 25 detects a stored power amount of the battery 5 mounted on the work vehicle 1 as this work vehicle 1 is accommodated within the accommodation case 21. To this end, in an inner wall portion of the accommodation case 21, there is provided a connection terminal 201 connectable to a charging terminal 7 provided at the front end portion of the work vehicle 1. As the work vehicle 1 is accommodated in the accommodation case 21 from the front side in the advancing direction, it is arranged such that the charging terminal 7 and the connection terminal 201 are connected to each other. Via this connection terminal 201, the stored power amount of the battery 5 is detected. It is not easy to detect this stored power amount directly. Thus, preferably, an arrangement may be made such that the detection section 25 detects an output voltage of the battery 5 via the connection terminal 201 and then detects the stored power amount on a difference between this output voltage and an output voltage at time of fully charged state of the battery 5. As such detection is known, explanation thereof will be omitted herein. The detection result of the detection section 25 will be transmitted to the power storage section 26 to be described later.

The power storage section 26 charges the battery 5 by using the electric power from the electric generator 24 if the stored power amount of the battery 5 is equal to or smaller than a preset stored power amount. Such preset stored power amount can be set to be 50% of the fully charged stored power amount (100%) of the battery 5. Needless to say, it may also be set as any other value (i.e. a value greater than 50% or a value smaller than 50%). The power storage section 26 allows power storage in the battery 5 by the power from the electric generator 24 if the detection result of the detection section 25 is equal to or smaller than the preset stored power amount (e.g. 50% of the fully charged stored power amount).

With the above arrangement, if the stored power amount of the battery 5 of the work vehicle 1 accommodated in the accommodation case 21 falls short of the predetermined stored power amount, charging can be done automatically even during transportation by the transporter vehicle 300. Therefore, as there is no need to provide a charger device for each work site, installment cost can be reduced. Further, in case such grass cutting work is to be carried out by a contractor, the contractor will deliver the work vehicles 1 to the work site to cause them to carry out the work and will collect the work vehicles 1 after completion of the work, thus, eliminating need to install a charging stand. On the side of the client of the contracted work too, no charging stand needs to be installed. So, capital investment can be eliminated.

### [Other Embodiments]

In the foregoing embodiment, it was explained that the accommodation device 100 includes the detection section 25 and the power storage section 26. However, the accommodation device 100 can be configured with omission of the detection section 25 and the power storage section 26. In such case, it will be advantageous to arrange for instance such that charging will be done irrespectively of the stored power amount of the battery 5 when the work vehicle 1 is accommodated in the accommodation case 21.

In the foregoing embodiment, it was explained that the work vehicle 1 includes the temperature sensor 41, the gas cylinder 42 and the valve control section 43. However, the work vehicle 1 can be configured with omission of the temperature sensor 41, the gas cylinder 42 and the valve control section 43.

In the foregoing embodiment, it was explained that the work vehicle 1 includes the air blowing section 51 and the arm portions 52. However, the work vehicle 1 can be configured with omission of the air blowing section 51 and the arm portions 52.

In the foregoing embodiment, it was explained that the work is a grass cutting work. However, it may be any other work.

### INDUSTRIAL APPLICABILITY

The present invention relates to an accommodation device for accommodating a plurality of work vehicles which carry out a work while traveling autonomously.

### REFERERENCE SIGN LIST

- 1:: work vehicle
- 5:: battery
- 21:: accommodation case
- 22:: supporting section
- 23:: actuator
- 24:: electric generator
- 25:: detection section
- 26:: power storage section
- 41:: temperature sensor
- 42:: gas cylinder
- 43:: valve control section
- 51:: air blowing section
- 52:: arm portion
- 100:: accommodation device
- 300:: transporter vehicle

## Claims

1. An accommodation device (100) configured to accommodate a plurality of work vehicles (1) configured to carry out a work while traveling autonomously, the accommodation device (100) comprising:
a plurality of accommodation cases (21) configured to be mounted on a load carrying bed of a transporter vehicle (300) and capable of accommodating the plurality of work vehicles (1) individually;
**characterized by**:
a supporting section (22) for supporting the plurality of accommodation cases (21) respectively and arranged to allow movement thereof along a preset path;
an actuator (23) for driving the supporting section (22) for causing the accommodation cases (21) to move along the path; and
an electric generator (24) for supplying electric power to the actuator (23),
the accommodation cases (21), the supporting section (22), the actuator (23), and the electric generator (24) being configured to be mounted altogether on the load carrying bed of the transporter vehicle (300).

2. The accommodation device (100) of claim 1, further comprising:
a detection section (25) for detecting a stored power amount of a battery (5) mounted on the work vehicle (1) as the work vehicle (1) is accommodated in the accommodation case (21); and
a power storage section (26) for charging electric power to the battery (5) to be stored therein by using electric power from the electric generator (24) in case the stored power amount of the battery (5) falls short of a preset power storage amount.

3. The accommodation device (100) of claim 1 or 2, further comprising:
at least one work vehicle (1);
a temperature sensor (41) mounted on the work vehicle (1) for detecting an ambient temperature;
a gas cylinder (42) mounted on the work vehicle (1) and charged with fire extinguishing gas; and
a valve control section (43) configured to open a valve of the gas cylinder (42) when the ambient temperature becomes equal to or higher than a preset temperature.

4. The accommodation device (100) of any one of claims 1-3, wherein:
the work to be carried out by the work vehicles (1) is a grass cutting work for cutting grass growing in the work site; and
the accommodation device (100) includes at least one work vehicle (1);
the work vehicle (1) includes an air blowing section (51) for blowing air onto a dropped object in the work site.

5. The accommodation device (100) of any one of claims 1-4, wherein:
the work to be carried out by the work vehicles (1) is a grass cutting work for cutting grass growing in the work site; and
the accommodation device (100) includes at least one work vehicle (1);
the work vehicle (1) includes an arm portion that extends from a vehicle body along a work surface of the work site in a direction intersecting an advancing direction of the work vehicle (1).

## Patentansprüche

1. Unterbringungsvorrichtung (100), die dazu ausgestaltet ist, mehrere Arbeitsfahrzeuge (1) unterzubringen, die dazu ausgestaltet sind, eine Arbeit auszuführen, während sie autonom fahren, wobei die Unterbringungsvorrichtung (100) umfasst:
mehrere Unterbringungsgehäuse (21), die dazu ausgestaltet sind, auf einer Ladefläche eines Transportfahrzeugs (300) montiert zu werden, und dazu geeignet sind, die mehreren Arbeitsfahrzeuge (1) einzeln unterzubringen,
**gekennzeichnet durch**:
eine Tragesektion (22) zum jeweiligen Tragen der mehreren Unterbringungsgehäuse (21) und dazu angeordnet, um deren Bewegung entlang eines vorher festgelegten Pfads zu erlauben,
ein Stellglied (23), um die Tragesektion (22) anzutreiben, um die Unterbringungsgehäuse (21) zu veranlassen, sich entlang des Pfads zu bewegen, und
einen elektrischen Generator (24), um elektrische Energie dem Stellglied (23) zuzuführen,
wobei die Unterbringungsgehäuse (21), die Tragesektion (22), das Stellglied (23), und der elektrische Generator (24) dazu ausgestaltet sind, in ihrer Gesamtheit auf der Ladefläche des Transportfahrzeugs (300) montiert zu werden.

2. Unterbringungsvorrichtung (100) nach Anspruch 1, ferner umfassend:
eine Erfassungssektion (25) zum Erfassen einer gespeicherten Energiemenge einer Batterie (5), die an dem Arbeitsfahrzeug (1) montiert ist, wenn das Arbeitsfahrzeug (1) in dem Unterbringungsgehäuse (21) untergebracht ist, und
eine Energiespeichersektion (26) zum Laden der Batterie (5) mit elektrischer Energie, um darin gespeichert zu werden, unter Verwendung von elektrischer Energie von dem elektrischen Generator (24), falls die gespeicherte Energiemenge in der Batterie (5) unter eine vorher festgelegte Energiespeichermenge fällt.

3. Unterbringungsvorrichtung (100) nach Anspruch 1 oder 2, ferner umfassend:
zumindest ein Arbeitsfahrzeug (1),
einen Temperatursensor (41), der an dem Arbeitsfahrzeug (1) montiert ist, zum Erfassen einer Umgebungstemperatur,
einen Gaszylinder (42), der an dem Arbeitsfahrzeug (1) montiert und mit Feuerlöschgas beladen ist, und
eine Ventilsteuerungssektion (43), die dazu ausgestaltet ist, ein Ventil des Gaszylinders (42) zu öffnen, wenn die Umgebungstemperatur gleich oder höher als eine vorher festgelegte Temperatur wird.

4. Unterbringungsvorrichtung (100) nach einem der Ansprüche 1-3, wobei:
die Arbeit, die von den Arbeitsfahrzeugen (1) ausgeführt werden soll, eine Grasschnittarbeit zum Schneiden von Gras ist, das an der Arbeitsstelle wächst,
die Unterbringungsvorrichtung (100) zumindest ein Arbeitsfahrzeug (1) beinhaltet, und
das Arbeitsfahrzeug (1) eine Luftblassektion (51) zum Blasen von Luft auf ein heruntergefallenes Objekt an der Arbeitsstelle beinhaltet.

5. Unterbringungsvorrichtung (100) nach einem der Ansprüche 1-4, wobei:
die Arbeit, die von den Arbeitsfahrzeugen (1) ausgeführt werden soll, eine Grasschnittarbeit zum Schneiden von Gras ist, das an der Arbeitsstelle wächst, und
die Unterbringungsvorrichtung (100) zumindest ein Arbeitsfahrzeug (1) beinhaltet, und
das Arbeitsfahrzeug (1) einen Armabschnitt beinhaltet, der sich von einem Fahrzeugkörper entlang einer Arbeitsoberfläche der Arbeitsstelle in eine Richtung erstreckt, die eine Fortbewegungsrichtung des Arbeitsfahrzeugs (1) schneidet.

## Revendications

1. Dispositif de rangement (100) configuré pour ranger une pluralité de véhicules de travail (1) configurés pour réaliser un travail tout en se déplaçant de manière autonome, le dispositif de rangement (100) comprenant :
une pluralité de boîtiers de rangement (21) configurés pour être montés sur un lit de support de charge d'un véhicule transporteur (300) et pouvant ranger la pluralité de véhicules de travail (1) individuellement ;
**caractérisé par** :
une section de support (22) pour supporter la pluralité de boîtiers de rangement (21) respectivement et agencée pour permettre son mouvement le long d'une trajectoire prédéterminée ;
un actionneur (23) pour entraîner la section de support (22) pour amener les boîtiers de rangement (21) à se déplacer le long de la trajectoire ; et
un générateur électrique (24) pour fournir l'énergie électrique à l'actionneur (23),
les boîtiers de rangement (21), la section de support (22), l'actionneur (23) et le générateur électrique (24) étant configurés pour être montés ensemble sur le lit de support de charge du véhicule transporteur (300).

2. Dispositif de rangement (100) selon la revendication 1, comprenant en outre :
une section de détection (25) pour détecter une quantité d'énergie stockée d'une batterie (5) montée sur le véhicule de travail (1) lorsque le véhicule de travail (1) est rangé dans le boîtier de rangement (21) ; et
une section de stockage d'énergie (26) pour charger l'énergie électrique dans la batterie (5) pour y être stockée en utilisant l'énergie électrique provenant du générateur électrique (24) dans le cas dans lequel la quantité d'énergie stockée de la batterie (5) est en deçà d'une quantité de stockage d'énergie prédéterminée.

3. Dispositif de rangement (100) selon la revendication 1 ou 2, comprenant en outre :
au moins un véhicule de travail (1) ;
un capteur de température (41) monté sur le véhicule de travail (1) pour détecter une température ambiante ;
une bouteille de gaz (42) montée sur le véhicule de travail (1) et chargée avec un gaz extincteur ; et
une section de commande de valve (43) configurée pour ouvrir une valve de la bouteille de gaz (42) lorsque la température ambiante est égale ou supérieure à une température prédéterminée.

4. Dispositif de rangement (100) selon l'une quelconque des revendications 1 à 3, dans lequel :
le travail à réaliser par les véhicules de travail (1) est un travail de tonte pour couper le gazon se développant sur le site de travail ; et
le dispositif de rangement (100) comprend au moins un véhicule de travail (1) ;
le véhicule de travail (1) comprend une section de soufflage d'air (51) pour souffler l'air sur un objet tombé sur le site de travail.

5. Dispositif de rangement (100) selon l'une quelconque des revendications 1 à 4, dans lequel :
le travail à réaliser par les véhicules de travail (1) est un travail de tonte pour couper l'herbe se développant sur le site de travail ; et
le dispositif de rangement (100) comprend au moins un véhicule de travail (1) ;
le véhicule de travail (1) comprend une partie de bras qui s'étend à partir d'un corps de véhicule le long d'une surface de travail du site de travail dans une direction coupant une direction d'avancement du véhicule de travail (1).
